(19) Europäisches Patentamt
European Patent Office
Office européen des brevets

(11) EP 4 357 430 A1

(12) **EUROPEAN PATENT APPLICATION**
published in accordance with Art. 153(4) EPC

(43) Date of publication:
**24.04.2024 Bulletin 2024/17**

(21) Application number: **22824639.3**

(22) Date of filing: **30.03.2022**

(51) International Patent Classification (IPC):
***C09D 13/00*** *(2006.01)* ***B43K 19/02*** *(2006.01)*
***B43K 19/18*** *(2006.01)*

(52) Cooperative Patent Classification (CPC):
**B43K 19/02; B43K 19/18; C09D 13/00**

(86) International application number:
**PCT/JP2022/016268**

(87) International publication number:
**WO 2022/264643 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 JP 2021101630**

(71) Applicant: **Mitsubishi Pencil Company, Limited**
**Tokyo 140-8537 (JP)**

(72) Inventor: **MURATA, Tatsuya**
**Fujioka-shi, Gunma 375-8501 (JP)**

(74) Representative: **Vossius & Partner**
**Patentanwälte Rechtsanwälte mbB**
**Siebertstrasse 3**
**81675 München (DE)**

# (54) NON-BAKED PENCIL LEAD AND METHOD FOR MANUFACTURING SAME

(57) A non-baked pencil lead containing a water-soluble polymer, a crosslinking agent, and a powder, in which the water-soluble polymer is selected from a group consisting of a carboxymethyl cellulose salt, starch, polyvinyl alcohol, and xanthan gum, and the crosslinking agent is selected from a group consisting of an acid, polyamide epoxy, polyacrylamide, titanium alkoxide, and glyoxal.

FIG.1

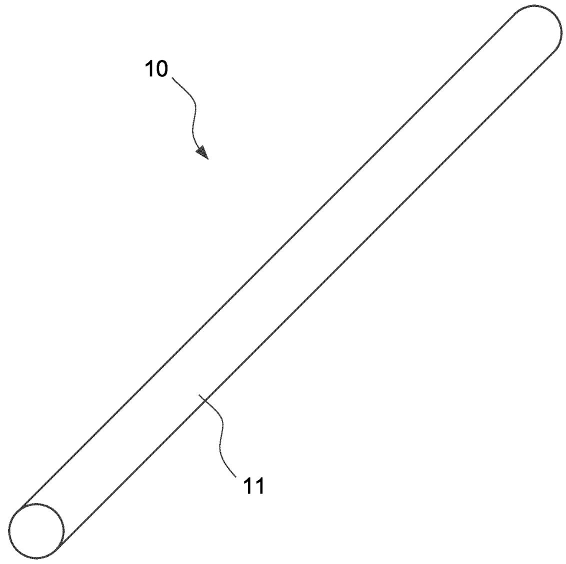


EP 4 357 430 A1

**Description**

Technical Field

The present invention relates to a non-baked pencil lead and a method for manufacturing the non-baked pencil lead.

Background Art

Conventionally, a baked pencil lead is generally manufactured by kneading graphite and clay to form a lead, sintering the clay at a high temperature of around 1,000°C to obtain a lead body, and then impregnating pores generated in the lead body with oil or the like. Such a baked pencil lead is widely used because graphite is fixed to a paper surface by the impregnated oil and erasability by an eraser is favorable (for example, Japanese Patent Application Laid-Open (JP-A) No. 2007-138031). However, for a baked pencil lead, heating at around 1,000°C is necessary for sintering the clay of a binder, which requires energy.

Moreover, a conventional non-baked pencil lead contains a wax or a resin as a binder, and is manufactured by kneading the binder with various inorganic or organic pigments, molding the mixture into a lead shape with an extrusion molding machine or the like, and then, for example, performing a drying treatment if necessary (for example, JP-A No. 2012-52109). In such a non-baked pencil lead, the binder is a wax or a resin, and thus the strength may be poor. Therefore, in a case in which the tip is sharpened, sufficient tip strength cannot be obtained at the time of writing in some cases. Moreover, there is almost no erasability by an eraser.

On the other hand, there is also a technique in which, by using a carboxymethyl cellulose salt as a binder, a non-baked pencil lead does not impair writing feeling and colorability even under high humidity and expansion of the lead due to moisture absorption does not occur (JP-A No. H11-335617). However, there is a problem in that a decrease in strength due to moisture absorption easily occurs.

SUMMARY OF INVENTION

Technical Problem

An object of each embodiment of the present application is to provide a non-baked pencil lead that has sufficient strength at the time of writing even in a case in which the tip of the pencil lead is sharpened, has little deterioration due to moisture absorption, has erasability, and achieves both improvement in density of a writing line and improvement in fixability, which cannot be obtained by a conventional method.

Solution to Problem

A non-baked pencil lead of a first aspect of the application contains a water-soluble polymer, a crosslinking agent, and a powder, in which the water-soluble polymer is selected from a group consisting of a carboxymethyl cellulose salt, starch, polyvinyl alcohol, and xanthan gum, and the crosslinking agent is selected from a group consisting of an acid, polyamide epoxy, polyacrylamide, titanium alkoxide, and glyoxal.

In the non-baked pencil lead of a second aspect of the application, the water-soluble polymer is a carboxymethyl cellulose salt and the crosslinking agent is an acid.

In the non-baked pencil lead of a third aspect of the application, in addition to the configuration of the second aspect, the acid is an organic acid.

In the non-baked pencil lead of a fourth aspect of the application, in addition to the configuration of the third aspect, the organic acid is a polymeric acid.

In the non-baked pencil lead of a fifth aspect of the application, in addition to the configuration of any one of the first to fourth aspects, the powder is at least one of a filler or a pigment.

The non-baked pencil lead of a sixth aspect of the application further contains cellulose, in addition to the configuration of any one of the first to fifth aspects.

In the non-baked pencil lead of a seventh aspect of the application, in addition to the configuration of any one of the first to sixth aspects, a lead body after molding is porous.

A method for manufacturing a non-baked pencil lead of an eighth aspect of the application includes a step of preparing a mixture of a water-soluble polymer, a crosslinking agent, and a powder, and a step of molding the mixture into a lead body. Moreover, in which in the molding step, the water-soluble polymer is reacted with the crosslinking agent so as to be crosslinked.

In the method for manufacturing a non-baked pencil lead of a ninth aspect of the application, in addition to the

configuration of the eighth aspect, in which the water-soluble polymer is a carboxymethyl cellulose salt and the crosslinking agent is an acid. Advantageous Effects of Invention

Since each embodiment of the present application is configured as described above, it is possible to provide a non-baked pencil lead that has sufficient strength at the time of writing even in a case in which the tip of the pencil lead is sharpened, has little deterioration due to moisture absorption, has erasability, and achieves both improvement in density of a writing line and improvement in fixability, which cannot be obtained by a conventional method.

BRIEF DESCRIPTION OF DRAWINGS

Fig. 1 is a perspective view schematically illustrating an appearance of a non-baked pencil lead of an embodiment.

DESCRIPTION OF EMBODIMENTS

A non-baked pencil lead of an embodiment of the application contains a water-soluble polymer, a crosslinking agent, and a powder, in which the water-soluble polymer is selected from a group consisting of a carboxymethyl cellulose salt, starch, polyvinyl alcohol, and xanthan gum, and the crosslinking agent is selected from a group consisting of an acid, polyamide epoxy, polyacrylamide, titanium alkoxide, and glyoxal. Preferably, the water-soluble polymer is a carboxymethyl cellulose salt and the crosslinking agent is an acid.

The carboxymethyl cellulose salt is a derivative of cellulose and refers to carboxymethyl cellulose in which hydrogen (-H) is substituted with a carboxymethyl group ($-CH_2COOH$) in a part of the hydroxy group of a glucopyranose monomer constituting the skeleton of cellulose, in which a hydrogen ion at the terminal of the carboxymethyl group is substituted with a metal ion. Examples of the metal ion include a sodium ion and a potassium ion. For example, sodium carboxymethyl cellulose represented by a structural formula of the following Formula (1) is mentioned as an example of the carboxymethyl cellulose salt.

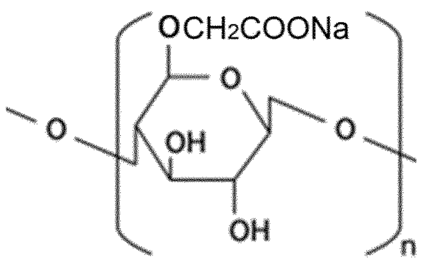

···Formula (1)

The acid may be either an organic acid or an inorganic acid. The sodium ion of the sodium carboxymethyl cellulose is substituted with an acid to form acid-type carboxymethyl cellulose, which is insolubilized to suppress moisture absorption.

The powder in the present embodiment is at least one of a filler or a pigment.

The filler is not particularly limited as long as it is used for a conventional non-baked pencil lead, and any filler can be used. For example, white fillers such as boron nitride, kaolin, talc, mica, and calcium carbonate can be used, and depending on the hue of a solid drawing material, colored fillers can also be used, and mixtures of several kinds thereof can also be used. In particular, preferred examples thereof include boron nitride, kaolin, and talc from their physical properties and shapes.

Examples of the pigment include pigments such as titanium oxide, iron black, carbon black, Prussian blue, ultramarine blue, Blue No. 1, red iron oxide, yellow iron oxide, chromium oxide, chromium hydroxide, zinc oxide, zirconium oxide, cobalt oxide, argentine, bismuth oxychloride, mica titanium, Blue No. 2, Blue No. 404, Red No. 2, Red No. 3, Red No. 102, Red No. 104, Red No. 105, Red No. 106, DPP red, Yellow No. 4, Yellow No. 5, and Green No. 3, and these can be used singly or as a mixture of two or more kinds thereof.

The acid in the embodiment may be either an inorganic acid or an organic acid, but is more preferably an organic acid.

The organic acid is a generic term for organic compounds exhibiting acidity, and many of them are carboxylic acids such as formic acid, acetic acid, oxalic acid, citric acid, tartaric acid, and acrylic acid. As the organic acid in the present aspect, among these carboxylic acids, an unsaturated carboxylic acid having one or more double bonds in a hydrocarbon chain, such as acrylic acid, is preferable.

The organic acid is preferably a polymeric acid. That is, this polymeric acid is obtained by polymerizing plural molecules of unsaturated carboxylic acid monomers in the organic acid at a double bond moiety. Examples thereof

include polyacrylic acid represented by a structural formula of the following Formula 2 in which acrylic acid ($CH_2$=CH-COOH) is polymerized to have a molecular weight of about 25,000.

$$[-CH_2CH(COOH)-]_n \qquad \text{Formula (2)}$$

The molecular weight of the polymeric acid is not particularly limited, and is preferably from 5,000 to 1,000,000. Since the molecular weight is 5,000 or more, in a case in which sodium ions of individual monomers constituting the carboxymethyl cellulose acid salt are substituted with an acid, polymers are crosslinked at a large number of sites, and thus the stability of bonding is improved. Since the molecular weight is 1,000,000 or less, mixing with the powder is facilitated.

The non-baked pencil lead can be manufactured by the following manufacturing method. That is, the production method includes a step of preparing a mixture of a carboxymethyl cellulose salt, an acid, and a powder, and a step of molding the mixture into a lead body. Moreover, in the molding step, the carboxymethyl cellulose salt is reacted with the acid to be crosslinked.

For example, a carboxymethyl cellulose salt, an acid, and a powder are kneaded to prepare a mixture. At this time, a solvent can also be added if necessary. The mixture obtained by preparation is extruded into a pencil lead shape with a plunger type or screw type extruder. In the case of using a solvent, the solvent is then removed by drying (about 40°C, 24 hours). By this molding, a non-baked pencil lead 10 having a substantially cylindrical lead body 11 as illustrated in Fig. 1 is obtained. The lead body after molding is porous having pores derived from the microscopic structure of the powder. The pores may be left as they are, or may be heated at from 60 to 80°C for 12 hours and then impregnated with fats and oils and/or waxes if necessary. As the solvent, a lower alcohol such as methanol or ethanol, water, or the like is used.

As the fats and oils, an oily substance which is liquid at normal temperature, for example, liquid paraffin, spindle oil, silicone oil, $\alpha$-olefin oligomer, squalane, or the like can be suitably used. Among these, silicone oil is particularly favorable, and examples thereof include dimethyl silicone oil, methyl phenyl silicone oil, methyl hydrogen silicone oil, cyclic dimethyl silicone oil, polyether-modified silicone oil, methylstyryl-modified silicone oil, and alkyl-modified silicone oil.

In addition to the above, various water-soluble organic polymer binders such as polyvinyl alcohol and methyl cellulose can also be used as an auxiliary binder. Moreover, in addition to the above components, cellulose may be further contained.

By the manufacturing method as described above, a non-baked pencil lead obtained by kneading and molding at least a carboxymethyl cellulose salt, an acid, and a powder is manufactured so that a non-baked pencil lead with suppressed hygroscopic deterioration of strength and having erasability is manufactured. Further, it is possible to improve both the density of the writing line and the fixability.

## Examples

Hereinafter, each of Examples and Comparative Examples will be described. In the following Examples and Comparative Examples, CSP (Nippon Kokuen Group) was used as graphite and High micron HE5 (Takehara Chemical Industrial Co., Ltd.) was used as talc.

### [A] Examples 1 to 9

#### (1) Raw Materials

Raw materials of non-baked pencil leads of Examples 1 to 9 and Comparative Examples 1 and 2 had the following composition.

#### (1-1) Example 1

The content of the powder with respect to the total amount of Example 1 was set to 70 mass% for graphite and 14 mass% for talc. Moreover, the content of carboxymethyl cellulose sodium salt (SUNROSE F20LC, Nippon Paper Industries Co., Ltd.) with respect to the total amount was set to 8 mass%. Moreover, the content of polyacrylic acid (AQUALIC HL-415, NIPPON SHOKUBAI CO., LTD.) as the acid with respect to the total amount was set to 8 mass%. Note that the viscosity at 1% of SUNROSE F20LC at 25°C was from 150 to 250 mPa·m and the degree of etherification was from 0.55 to 0.65.

(1-2) Example 2

The content of the powder with respect to the total amount of Example 2 was set to 70 mass% for graphite and 14 mass% for talc. Moreover, the content of carboxymethyl cellulose sodium salt (SUNROSE F10MC, Nippon Paper Industries Co., Ltd.) with respect to the total amount was set to 8 mass%. Moreover, the content of polyacrylic acid (AQUALIC HL-415, NIPPON SHOKUBAI CO., LTD.) as the acid with respect to the total amount was set to 8 mass%. Note that the viscosity at 1% of SUNROSE F10MC at 25°C was from 50 to 150 mPa·m and the degree of etherification was from 0.65 to 0.75.

(1-3) Example 3

The content of the powder with respect to the total amount of Example 3 was set to 70 mass% for graphite and 14 mass% for talc. Moreover, the content of carboxymethyl cellulose sodium salt (SUNROSE F30MC, Nippon Paper Industries Co., Ltd.) with respect to the total amount was set to 8 mass%. Moreover, the content of polyacrylic acid (AQUALIC HL-415, NIPPON SHOKUBAI CO., LTD.) as the acid with respect to the total amount was set to 8 mass%. Note that the viscosity at 1% of SUNROSE F30MC at 25°C was from 250 to 350 mPa·m and the degree of etherification was from 0.65 to 0.75.

(1-4) Example 4

The content of the powder with respect to the total amount of Example 4 was set to 70 mass% for graphite and 14 mass% for talc. Moreover, the content of carboxymethyl cellulose sodium salt (SUNROSE F120MC, Nippon Paper Industries Co., Ltd.) with respect to the total amount was set to 8 mass%. Moreover, the content of polyacrylic acid (AQUALIC HL-415, NIPPON SHOKUBAI CO., LTD.) as the acid with respect to the total amount was set to 8 mass%. Note that the viscosity at 1% of SUNROSE F120MC at 25°C was from 850 to 1,200 mPa·m and the degree of etherification was from 0.65 to 0.75.

(1-5) Example 5

The content of the powder with respect to the total amount of Example 5 was set to 70 mass% for graphite and 14 mass% for talc. Moreover, the content of carboxymethyl cellulose sodium salt (SUNROSE F20HC, Nippon Paper Industries Co., Ltd.) with respect to the total amount was set to 8 mass%. Moreover, the content of polyacrylic acid (AQUALIC HL-415, NIPPON SHOKUBAI CO., LTD.) as the acid with respect to the total amount was set to 8 mass%. Note that the viscosity at 1% of SUNROSE F20HC at 25°C was from 150 to 250 mPa·m and the degree of etherification was from 0.80 to 1.00.

(1-6) Example 6

The content of the powder with respect to the total amount of Example 6 was set to 70 mass% for graphite and 14 mass% for talc. Moreover, the content of carboxymethyl cellulose sodium salt (SUNROSE F30MC, Nippon Paper Industries Co., Ltd.) with respect to the total amount was set to 8 mass%. Moreover, the content of polyacrylic acid (AQUALIC AS-58, NIPPON SHOKUBAI CO., LTD.) as the acid with respect to the total amount was set to 8 mass%.

(1-7) Example 7

The content of the powder with respect to the total amount of Example 7 was set to 70 mass% for graphite and 20 mass% for talc. Moreover, the content of carboxymethyl cellulose sodium salt (SUNROSE F30MC, Nippon Paper Industries Co., Ltd.) with respect to the total amount was set to 5 mass%. Moreover, the content of citric acid as the acid with respect to the total amount was set to 5 mass%.

(1-8) Example 8

The content of the powder with respect to the total amount of Example 8 was set to 70 mass% for graphite and 20 mass% for talc. Moreover, the content of carboxymethyl cellulose sodium salt (SUNROSE F30MC, Nippon Paper Industries Co., Ltd.) with respect to the total amount was set to 5 mass%. Moreover, the content of oxalic acid as the acid with respect to the total amount was set to 5 mass%.

(1-9) Example 9

The content of the powder with respect to the total amount of Example 9 was set to 70 mass% for graphite and 20 mass% for talc. Moreover, the content of carboxymethyl cellulose sodium salt (SUNROSE F30MC, Nippon Paper Industries Co., Ltd.) with respect to the total amount was set to 5 mass%. Moreover, the content of hydrochloric acid as the acid with respect to the total amount was set to 5 mass%.

(1-10) Comparative Example 1

The content of the powder with respect to the total amount was set to 70 mass% for graphite and 22 mass% for talc. Moreover, the content of carboxymethyl cellulose sodium salt (SUNROSE F30MC, Nippon Paper Industries Co., Ltd.) with respect to the total amount was set to 5 mass%. Note that, in Comparative Example 1, no acid was contained.

(1-11) Comparative Example 2

The content of the powder with respect to the total amount was set to 70 mass% for graphite and 14 mass% for talc. Moreover, the content of carboxymethyl cellulose sodium salt (SUNROSE F30MC, Nippon Paper Industries Co., Ltd.) with respect to the total amount was set to 5 mass%. Note that, in Comparative Example 2, sodium polyacrylate (AQUALIC DL-522) was used instead of the acid, and the content thereof with respect to the total amount was set to 8 mass%.

(2) Manufacture of Non-Baked Pencil Lead

Each of the raw materials of Examples 1 to 9 and Comparative Examples 1 and 2 was kneaded, and then extruded into a pencil lead shape with a plunger type or screw type extruder to obtain a non-baked pencil lead.

(3) Bending Strength Measurement

The bending strength of each of the non-baked pencil leads of Examples 1 to 9 and Comparative Examples 1 and 2 was measured. Specifically, for each non-baked pencil lead, a three-point bending strength was measured at a distance of 40 mm between supporting points at a temperature of 23°C to determine a pressure (unit: MPa) at the time of breakage. The measurement was performed twice, that is, immediately after the manufacture and after standing-still in an environment of a temperature of 35°C and a humidity of 80% for 72 hours after the manufacture. The results are shown in Table 1 below. The "strength decreasing rate" in the following Table 1 is a numerical value Z (%) calculated by the following Formula (3), in a case in which the bending strength immediately after manufacture is designated as X and the bending strength after 3 days from the manufacture is designated as Y.

$$Z = (X - Y)/X \times 100 \quad \text{Formula (3)}$$

[Table 1]

| Example/Comparative Example | Bending strength (MPa) | | Strength decreasing rate (%) |
|---|---|---|---|
| | Immediately after manufacture | After 3 days from manufacture | |
| Example 1 | 39.8 | 28.9 | 27.4 |
| Example 2 | 48.0 | 38.2 | 20.5 |
| Example 3 | 44.8 | 35.6 | 20.6 |
| Example 4 | 42.5 | 37.3 | 12.2 |
| Example 5 | 34.3 | 31.9 | 7.0 |
| Example 6 | 36.6 | 27.6 | 24.5 |
| Example 7 | 17.0 | 10.6 | 37.6 |
| Example 8 | 21.3 | 16.5 | 22.7 |

(continued)

| Example/Comparative Example | Bending strength (MPa) | | Strength decreasing rate (%) |
|---|---|---|---|
| | Immediately after manufacture | After 3 days from manufacture | |
| Example 9 | 15.0 | 12.0 | 20.1 |
| Comparative Example 1 | 35.0 | 14.8 | 57.7 |
| Comparative Example 2 | 33.8 | 5.6 | 83.5 |

First, in Comparative Example 1 not containing an acid as a raw material, the strength decreasing rate was 57.7%, which was lower than half of the bending strength immediately after manufacture. Moreover, in Comparative Example 2 in which a salt (sodium polyacrylate) was used instead of an acid as a raw material, the strength decreasing rate was 83.5%, which is a remarkable decrease in bending strength.

On the other hand, in all of the non-baked pencil leads of Examples 1 to 9, the strength decreasing rate was lower than that in Comparative Examples. In particular, in Example 5, the strength decreasing rate was 7.0%, and the bending strength immediately after manufacture was almost maintained.

As a result, in Examples 1 to 9, it is presumed that, since the carboxymethyl cellulose salt was insolubilized into acid-type carboxymethyl cellulose by the acid, the reaction with moisture in the air was suppressed. Furthermore, in a case in which a polymeric acid is used as the acid (Examples 1 to 5), it is presumed that the acid-type carboxymethyl cellulose is stabilized by not only insolubilization of the carboxymethyl cellulose salt by the acid but also crosslinking with the linear moiety of the polymer.

[B] Examples 10 to 18

(4) Raw Materials

Raw materials of non-baked pencil leads of Examples 10 to 18 and Comparative Examples 3 to 5 had the following composition. The "mass%" indication shown below is the content with respect to the total amount.

(4-1) Example 10

Example 10 had a composition containing 60 mass% of graphite as the powder, 5 mass% of starch (NSP-EA, NIPPON STARCH CHEMICAL CO., LTD.; the same applies hereinafter) and 5 mass% of polyvinyl alcohol (PVA-105, Kuraray Co., Ltd.; the same applies hereinafter) as the water-soluble polymer, 5 mass% of polyacrylic acid (AQUALIC HL-415, NIPPON SHOKUBAI CO., LTD.; the same applies hereinafter) as a polymeric organic acid as the crosslinking agent, and 25 mass% of carbon black (MA-100, Mitsubishi Chemical Corporation; the same applies hereinafter) as a pigment.

(4-2) Example 11

Example 11 had a composition containing 48 mass% of graphite as the powder, 4 mass% of polyvinyl alcohol and 4 mass% of xanthan gum (Echo Gum, MP Gokyo Food & Chemical Co., Ltd.) as the water-soluble polymer, 4 mass% of polyacrylic acid as the crosslinking agent, 35 mass% of carbon black as a pigment, and 5 mass% of stearic acid soap (LI-ST, Nitto Chemical Industry Co., Ltd.; the same applies hereinafter) as metal soap.

(4-3) Example 12

Example 12 had a composition containing 47 mass% of graphite as the powder, 6 mass% of starch and 6 mass% of polyvinyl alcohol as the water-soluble polymer, 6 mass% of polyamide epoxy (Sumirez Resin 650, Taoka Chemical Co., Ltd.) as the crosslinking agent, and 35 mass% of carbon black as a pigment.

(4-4) Example 13

Example 13 had a composition containing 45 mass% of graphite and 10 mass% of talc as the powder, 3 mass% of carboxymethyl cellulose sodium salt (SUNROSE F30MC, Nippon Paper Industries Co., Ltd.) as the water-soluble polymer, 4 mass% of starch and 4 mass% of polyvinyl alcohol, 4 mass% of polyacrylic acid as the crosslinking agent,

and 30 mass% of carbon black as a pigment.

(4-5) Example 14

Example 14 had a composition containing 45 mass% of graphite and 10 mass% of talc as the powder, 1 mass% of carboxymethyl cellulose sodium salt (SUNROSE F30MC, Nippon Paper Industries Co., Ltd.) as the water-soluble polymer, 4 mass% of starch and 4 mass% of polyvinyl alcohol, 4 mass% of polyacrylic acid as the crosslinking agent, 30 mass% of carbon black as a pigment, and 2 mass% of cellulose nanofibers (TC-02X, Nippon Paper Industries Co., Ltd.).

(4-6) Example 15

Example 15 had a composition containing 45 mass% of graphite and 10 mass% of talc as the powder, 1 mass% of carboxymethyl cellulose sodium salt (SUNROSE F30MC, Nippon Paper Industries Co., Ltd.) as the water-soluble polymer, 4 mass% of starch and 4 mass% of polyvinyl alcohol, 4 mass% of polyacrylic acid as the crosslinking agent, 30 mass% of carbon black as a pigment, and 2 mass% of cellulose powder (KC FLOCK W-400G, Nippon Paper Industries Co., Ltd.).

(4-7) Example 16

Example 16 had a composition containing 47 mass% of graphite as the powder, 6 mass% of starch and 6 mass% of polyvinyl alcohol as the water-soluble polymer, 6 mass% of polyacrylamide (Harmide PY, Harima Chemicals Group, Inc.) as the crosslinking agent, 30 mass% of carbon black, and 5 mass% of stearic acid soap as metal soap.

(4-8) Example 17

Example 17 had a composition containing 50 mass% of graphite and 6 mass% of talc as the powder, 2 mass% of carboxymethyl cellulose sodium salt (SUNROSE F30MC, Nippon Paper Industries Co., Ltd.) as the water-soluble polymer, 5 mass% of starch and 5 mass% of polyvinyl alcohol, 2 mass% of titanium alkoxide (ORGATIX TA-10, Matsumoto Fine Chemical Co., Ltd.) as the crosslinking agent, and 30 mass% of carbon black as a pigment.

(4-9) Example 18

Example 18 had a composition containing 50 mass% of graphite and 6 mass% of talc as the powder, 2 mass% of carboxymethyl cellulose sodium salt (SUNROSE F30MC, Nippon Paper Industries Co., Ltd.) as the water-soluble polymer, 5 mass% of starch and 5 mass% of polyvinyl alcohol, 2 mass% of glyoxal (reagent, FUJIFILM Wako Pure Chemical Corporation) as the crosslinking agent, and 30 mass% of carbon black as a pigment.

(4-10) Comparative Example 3

Comparative Example 3 had a composition containing 60 mass% of graphite and 10 mass% of talc as the powder, 5 mass% of carboxymethyl cellulose sodium salt (SUNROSE F30MC, Nippon Paper Industries Co., Ltd.) as the water-soluble polymer, 25 mass% of carbon black as a pigment.

(4-11) Comparative Example 4

Comparative Example 4 had a composition containing 60 mass% of graphite and 10 mass% of talc as the powder, 5 mass% of polyacrylic acid as the crosslinking agent, and 25 mass% of carbon black as a pigment.

(4-12) Comparative Example 5

Comparative Example 5 had a composition containing 55 mass% of graphite and 10 mass% of talc as the powder, 5 mass% of starch and 5 mass% of polyvinyl alcohol as the water-soluble polymer, and 25 mass% of carbon black as a pigment.

(5) Manufacture of Non-Baked Pencil Lead

Each of the raw materials of Examples 10 to 18 and Comparative Examples 3 to 5 was kneaded, and then extruded into a pencil lead shape with a plunger type or screw type extruder to obtain a non-baked pencil lead.

(6) Bending Strength Measurement

The bending strength of each of the non-baked pencil leads of Examples 10 to 18 and Comparative Examples 3 to 5 was measured in the same manner as in the (3) shown above. The results are shown in Table 2 below.

[Table 2]

| Example/Comparative Example | Bending strength (MPa) | | Strength decreasing rate (%) |
|---|---|---|---|
| | Immediately after manufacture | After 3 days from manufacture | |
| Example 10 | 30.8 | 30.3 | 1.6 |
| Example 11 | 44.2 | 44.1 | 0.3 |
| Example 12 | 32.2 | 29.5 | 8.5 |
| Example 13 | 55.5 | 51.1 | 7.9 |
| Example 14 | 30.9 | 29.5 | 4.7 |
| Example 15 | 59.2 | 58.5 | 1.2 |
| Example 16 | 22.8 | 20.7 | 9.3 |
| Example 17 | 24.0 | 22.1 | 7.7 |
| Example 18 | 15.7 | 14.7 | 6.1 |
| Comparative Example 3 | 32.2 | 15.3 | 52.5 |
| Comparative Example 4 | 18.5 | 6.1 | 66.9 |
| Comparative Example 5 | 29.3 | 20.5 | 30.0 |

First, in Comparative Example 3 not containing a crosslinking agent as a raw material, the strength decreasing rate was 52.5%, which was lower than half of the bending strength immediately after manufacture. Similarly, also in Comparative Example 5 not containing a crosslinking agent, the strength decreasing rate was 30.0%, which was decreased to 70% of the bending strength immediately after manufacture. Moreover, in Comparative Example 4 not containing a water-soluble polymer as a raw material, the strength decreasing rate was 66.9%, which was decreased to about 30% of the bending strength immediately after manufacture.

On the other hand, in all of the non-baked pencil leads of Examples 10 to 18, the strength decreasing rate was remarkably lower than that in Comparative Examples. In particular, in Example 5, the strength decreasing rate was 0.3%, and the bending strength immediately after manufacture was almost maintained.

As a result, in Examples 10 to 18, it is presumed that since the water-soluble polymer was insolubilized by the crosslinking agent, the reaction with moisture in the air was suppressed, and the decrease in strength was also suppressed. Furthermore, in a case in which a polymeric organic acid is used as the acid (Examples 10, 11, and 13 to 15), it is presumed that the water-soluble polymer is stabilized by not only insolubilization of the water-soluble polymer by the acid but also crosslinking with the linear moiety of the polymer.

(7) Tip Strength

For the lead tip shape, the lead was scraped into a conical shape at an angle of 17 ± 1°, the tip thereof was formed into a truncated cone of 0.6 ± 0.1 mm, and it was confirmed that the tip shape was not distorted. The pencil shaft having the tip adjusted as described above was held at 60° with a dedicated fixing jig. Then, a load was applied at a speed of 10 mm/min, and the load in a case in which the tip was chipped was measured and taken as a tip strength value. Note that, in a case in which the load rapidly decreased by 0.7 N or more, it was determined that the lead was broken.

(8) Machine Writing Wear Amount

The machine writing measurement of the record type defined in 8.7 Writing density of JIS S 6006 was performed, and a machine writing wear amount of the non-baked lead was calculated.

(9) Drawing Line Density

In the method defined in 8.7 Writing density of JIS S 6006, the density of a streak writing line was measured using a colorimeter.

(10) Results

The measurement results of the tip strength, the machine writing wear amount, and the drawing line density are shown in the following Table 3.

[Table 3]

| Example/Comparative Example | Tip strength (N) | Machine writing wear amount (mm) | Drawing line density |
|---|---|---|---|
| Example 10 | 5.0 | 1.67 | 0.409 |
| Example 11 | 5.5 | 1.73 | 0.420 |
| Example 12 | 5.5 | 1.76 | 0.391 |
| Example 13 | 6.1 | 2.29 | 0.593 |
| Example 14 | 4.4 | 2.17 | 0.557 |
| Example 15 | 6.3 | 1.96 | 0.528 |
| Example 16 | 4.0 | 2.57 | 0.602 |
| Example 17 | 3.6 | 2.67 | 0.664 |
| Example 18 | 3.0 | 3.04 | 0.673 |
| Comparative Example 3 | 4.8 | 1.52 | 0.566 |
| Comparative Example 4 | 2.5 | - | - |
| Comparative Example 5 | 4.2 | 1.13 | 0.235 |

From the results shown in Table 3, it was found that the tip strength, the writing quality, and the drawing line density having no problem in practical use regarding the formulation of each Example could be realized.

INDUSTRIAL APPLICABILITY

The invention can be used as a non-baked pencil lead.

## Claims

**1.** A non-baked pencil lead comprising: a water-soluble polymer; a crosslinking agent; and a powder,

wherein the water-soluble polymer is selected from a group consisting of a carboxymethyl cellulose salt, starch, polyvinyl alcohol, and xanthan gum, and
the crosslinking agent is selected from a group consisting of an acid, polyamide epoxy, polyacrylamide, titanium alkoxide, and glyoxal.

**2.** The non-baked pencil lead according to claim 1, wherein the water-soluble polymer is a carboxymethyl cellulose salt and the crosslinking agent is an acid.

**3.** The non-baked pencil lead according to claim 2, wherein the acid is an organic acid.

**4.** The non-baked pencil lead according to claim 3, wherein the organic acid is a polymeric acid.

**5.** The non-baked pencil lead according to any one of claims 1 to 4, wherein the powder is at least one of a filler or a pigment.

**6.** The non-baked pencil lead according to any one of claims 1 to 5, further comprising cellulose.

**7.** The non-baked pencil lead according to any one of claims 1 to 6, wherein a lead body after molding is porous.

**8.** A method of manufacturing a non-baked pencil lead, comprising:

preparing a mixture of a water-soluble polymer, a crosslinking agent, and a powder; and
molding the mixture into a lead body, wherein the water-soluble polymer is reacted with the crosslinking agent so as to be crosslinked.

**9.** The method of manufacturing a non-baked pencil lead according to claim 8, wherein the water-soluble polymer is a carboxymethyl cellulose salt and the crosslinking agent is an acid.

FIG.1

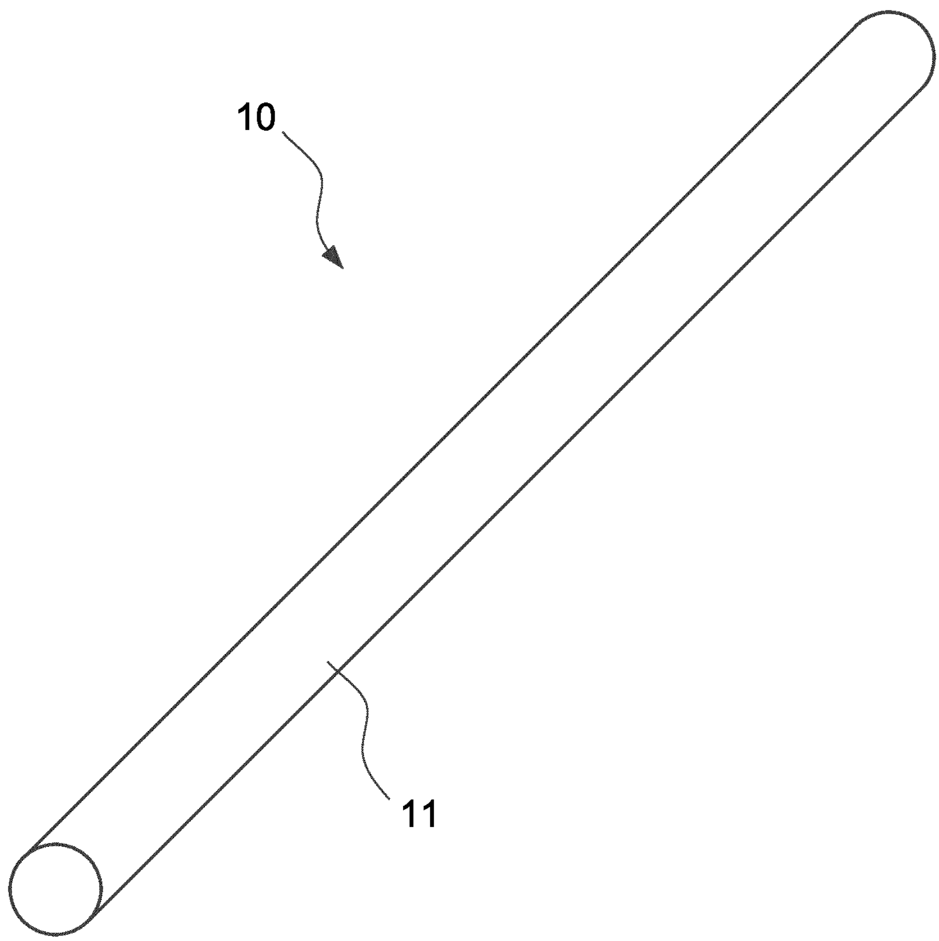

## INTERNATIONAL SEARCH REPORT

International application No. **PCT/JP2022/016268**

**A. CLASSIFICATION OF SUBJECT MATTER**

***C09D 13/00***(2006.01)i; ***B43K 19/02***(2006.01)i; ***B43K 19/18***(2006.01)i
FI: C09D13/00; B43K19/02 J; B43K19/18

According to International Patent Classification (IPC) or to both national classification and IPC

**B. FIELDS SEARCHED**

Minimum documentation searched (classification system followed by classification symbols)

C09D13/00; B43K19/02; B43K19/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-209506 A (2015.11.24) 24 November 2015 (2015-11-24) claim 1, paragraphs [0011], [0024], [0025], [0034], example 2 | 1-3, 5, 7-9 |
| Y | | 6-7 |
| A | | 4 |
| Y | WO 2020/004390 A1 (MITSUBISHI PENCIL CO., LTD.) 20 January 2020 (2020-01-20) claim 1, paragraphs [0043]-[0045], [0048], table 1, examples 1-4 | 6-7 |
| X | CN 108129914 A (UNIVERSITY SHANXXAI SCIENCE & TECHNOLOGY) 08 June 2018 (2018-06-08) claims 1-3, example 2 | 8 |
| A | JP 5-331406 A (MITSUBISHI PENCIL CO., LTD.) 14 December 1993 (1993-12-14) claim 1, paragraphs [0032], [0048]-[0053] | 1-9 |
| A | JP 4288618 B2 (JAPAN ATOMIC ENERGY AGENCY) 01 July 2009 (2009-07-01) claim 1, paragraph [0017] | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/016268**

**Box No. III Observations where unity of invention is lacking (Continuation of item 3 of first sheet)**

This International Searching Authority found multiple inventions in this international application, as follows:

Invention 1: Claims 1-7

Invention 2: Claims 8-9

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/016268**

| Patent document cited in search report | Publication date (day/month/year) | Patent family member(s) | Publication date (day/month/year) |
|---|---|---|---|
| JP 2015-209506 A | 24 November 2015 | US 2017/0051173 A1<br>claim 7, paragraphs [0140]-[0147], [0163]-[0165], example 10<br>WO 2015/166859 A1<br>EP 3138884 A1 | |
| WO 2020/004390 A1 | 20 January 2020 | US 2021/0371690 A1<br>claim 1, paragraphs [0071], [0072], [0075], table 1, examples 1-4<br>EP 3812431 A<br>CN 112313295 A | |
| CN 108129914 A | 08 June 2018 | (Family: none) | |
| JP 5-331406 A | 14 December 1993 | US 5318622 A<br>claim 1, column 6, lines 34-47, examples 1-3<br>EP 573000 A2 | |
| JP 4288618 B2 | 01 July 2009 | US 2008/0070997 A1<br>claim 1, test example 1, paragraph [0040]<br>GB 2445818 A<br>CN 101157760 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007138031 A
- JP 2012052109 A
- JP H11335617 A